# EUROPÄISCHE PATENTANMELDUNG

(11) **EP 3 991 913 A2**
(43) Veröffentlichungstag der Anmeldung: **04.05.2022**
(21) Anmeldenummer: 21205473.8
(22) Anmeldetag: 29.10.2021
(51) Int. Cl.: B23Q 39/02, B23B 3/16, B23Q 39/00

(54) **WERKZEUGMASCHINE SOWIE VERFAHREN ZUR SPANENDEN BEARBEITUNG VON FLÄCHEN EINES UM EINE ROTATIONSACHSE ROTIERENDEN WERKSTÜCKS**

(30) Priorität: 30.10.2020 DE 102020128609
(71) Anmelder: Buderus Schleiftechnik GmbH, 35614 Aßlar (DE)
(72) Erfinder: Mühl, Bernd, 65620 Waldbrunn (DE); Jörg, Reiner, 78144 Schramberg / Tennenbronn (DE)
(74) Vertreter: Cohausz & Florack

(57) **Zusammenfassung**

Die Erfindung betrifft eine Werkzeugmaschine zur spanenden Bearbeitung von Flächen, insbesondere von rotationssymmetrischen Flächen, eines um eine Rotationsachse (R) rotierenden Werkstücks (4) umfassend: mindestens einen Arbeitsraum (16), mindestens eine in dem Arbeitsraum (16) angeordnete Werkstückspindel zur Aufnahme und zum rotierenden Antrieb des Werkstücks (4), mindestens zwei Werkzeuge (20), wobei die Werkzeuge (20) jeweils zumindest eine Werkzeugschneide (36) aufweisen und wobei die Werkzeugschneiden (36) mit dem rotierenden Werkstück (4) in spanenden Eingriff bringbar sind, und zumindest zwei Werkzeugvorschubvorrichtungen (22) zur translatorischen Bewegung der Werkzeuge (20) sowie der an den Werkzeugen (20) angeordneten Werkzeugschneiden (36), wobei jeweils ein Werkzeug (20) einer Werkzeugschubvorrichtung (22) zugeordnet ist. Die Aufgabe, eine Werkzeugmaschine sowie ein Verfahren zur spanenden Bearbeitung von Flächen eines um eine Rotationsachse rotierenden Werkstücks zur Verfügung zu stellen, welche verkürzte Taktzeiten unter Beibehaltung einer ausreichenden Maßhaltigkeit und/oder einer ausreichenden Oberflächengüte ermöglichen, wird dadurch gelöst, dass die an den Werkzeugen (20) angeordneten Werkzeugschneiden (36) mittels der Werkzeugschubvorrichtungen (22) in im Wesentlichen drei zueinander orthogonal verlaufenden Achsen (X, Y, Z) verfahrbar sind. Die Erfindung betrifft ebenfalls ein Verfahren zur spanenden Bearbeitung von Flächen, insbesondere von rotationssymmetrischen Flächen, eines um eine Rotationsachse (R) rotierenden Werkstücks (4).

## Beschreibung

Die Erfindung betrifft eine Werkzeugmaschine zur spanenden Bearbeitung von Flächen, insbesondere von rotationssymmetrischen Flächen eines um eine Rotationsachse rotierenden Werkstücks, wobei die Werkzeugmaschine mindestens einen Arbeitsraum, mindestens eine in dem Arbeitsraum angeordnete Werkstückspindel zur Aufnahme und zum rotierenden Antrieb des Werkstücks, mindestens zwei Werkzeuge, wobei die Werkzeuge jeweils zumindest eine Werkzeugschneide aufweisen und wobei die Werkzeugschneide mit dem rotierenden Werkstück in spanenden Eingriff bringbar ist, und zumindest zwei Werkzeugvorschubvorrichtungen zur translatorischen Bewegung der Werkzeuge sowie der an den Werkzeugen angeordneten Werkzeugschneiden umfasst, wobei jeweils ein Werkzeug einer Werkzeugschubvorrichtung zugeordnet ist.

Die Erfindung betrifft ebenfalls ein Verfahren zur spanenden Bearbeitung von Flächen, insbesondere von rotationssymmetrischen Flächen, eines um eine Rotationsachse rotierenden Werkstücks.

Werkzeugmaschinen zur spanenden Bearbeitung von Flächen, insbesondere von rotationssymmetrischen Flächen, eines um eine Rotationsachse rotierenden Werkstücks sind aus dem Stand der Technik bekannt. Dabei können derartige Werkzeugmaschinen beispielsweise für die Schrupp- und/oder für die Schichtbearbeitung von Werkstücken eingesetzt werden.

Die aus dem Stand der Technik bekannten Werkzeugmaschinen bewirken allerdings, insbesondere durch eine nur einseitige Bearbeitung des Werkstücks mit einer Werkzeugschneide, eine ungleiche Beanspruchung des zu bearbeitenden Werkstücks. Dies führt beispielsweise bei instabilen Werkstücken zu unerwünschten Fertigungsungenauigkeiten. Des Weiteren kann eine solche einseitige Beanspruchung von Werkstücken auch bei stabilen Werkstücken nachteilig hinsichtlich der Maßhaltigkeit sein. Maßhaltigkeit ist vorliegend als ein Maß für die Abweichung der Istmaße eines Werkstücks von dem festgelegten Nennmaß des Werkstücks zu verstehen.

Zur Vermeidung der vorgenannten Nachteile ist aus dem Stand der Technik die sogenannte vier-achsige Drehbearbeitung bekannt. Hierzu weist eine Drehmaschine zwei autarke Werkzeuge umfassend Werkzeugschneiden auf, die gleichzeitig an dem zu bearbeitenden Werkstück im Eingriff sein können.

Solche Verfahren beziehungsweise Werkzeugmaschinen haben sich allerdings insofern als nachteilig erwiesen, als hierdurch drallbehaftete Oberflächen entstehen, und zwar unabhängig davon, welches Material bearbeitet wird. Derartige bearbeitete Werkstücke weisen durch den Vorschub der Werkzeuge eine Oberfläche mit regelmäßigen Strukturen in Form eines Gewindes auf, wodurch die gewünschte Maßhaltigkeit nicht gewährleistet werden kann.

Dies führt insbesondere dazu, dass nur sehr geringe Zerspanungsraten zur Gewährleistung einer ausreichenden Oberflächengüte umgesetzt werden können, wodurch sich die Taktzeiten der zu bearbeitenden Werkstücke erhöhen.

Insofern hat sich vor dem Hintergrund des voranstehend erläuterten Standes der Technik die Aufgabe ergeben, eine Werkzeugmaschine sowie ein Verfahren zur spanenden Bearbeitung von Flächen eines um eine Rotationsachse rotierenden Werkstücks zur Verfügung zu stellen, welche verkürzte Taktzeiten unter Beibehaltung einer ausreichenden Maßhaltigkeit und/oder einer ausreichenden Oberflächengüte ermöglichen.

Erfindungsgemäß wird diese Aufgabe gemäß einem ersten Aspekt der Erfindung durch eine Werkzeugmaschine zur spanenden Bearbeitung von Flächen eines um eine Rotationsachse rotierenden Werkstücks mit den in Anspruch 1 angegebenen Merkmalen gelöst. Bevorzugte und vorteilhafte Ausgestaltungen der erfindungsgemäßen Werkzeugmaschine sind in den auf Anspruch 1 rückbezogenen Ansprüchen angegeben.

Die erfindungsgemäße Werkzeugmaschine ist dadurch gekennzeichnet, dass die Werkzeuge sowie die an den Werkzeugen angeordneten Werkzeugschneiden, insbesondere während der spanenden Bearbeitung des Werkstücks, mittels der Werkzeugschubvorrichtungen in im Wesentlichen drei zueinander orthogonal verlaufenden Achsen verfahrbar sind.

Indem die zwei Werkzeuge, welche jeweils zumindest eine Werkzeugschneide aufweisen, mit dem zu bearbeitenden Werkstück in Eingriff gebracht werden können, können die während des Eingriffs bzw. während der spanenden Bearbeitung entstehenden Schnittkräfte reduziert werden, wodurch eine höhere Maßhaltigkeit des zu bearbeitenden Werkstücks gewährleistet werden kann. Insbesondere kann die während der spanenden Bearbeitung auftretende Verbiegung des Werkstücks reduziert werden. Bei der vorliegenden spanenden Bearbeitung des Werkstücks handelt es sich insbesondere um eine spanende Drehbearbeitung des Werkstücks.

Weiterhin erhöhen zwei Werkzeuge, die jeweils zumindest eine Werkzeugschneide aufweisen, das Zerspanvolumen pro Zeit, so dass die Taktzeiten der zu bearbeitenden Werkstücke reduziert werden können.

Wenn im vorliegenden Text im Zusammenhang mit geometrischen Angaben oder räumlichen Positionierungen, wie Maßgaben und Erläuterungen zur Parallelität, tangentialen oder orthogonalen Ausrichtung von Bauteilen oder Bewegungsachsen, der Ausdruck "im Wesentlichen" verwendet wird, so ist damit gemeint, dass die entsprechenden Maßgaben und Erläuterungen im Rahmen des technisch Möglichen gelten. Dies bedeutet, dass jeweils nicht eine den jeweiligen Maßgaben und Erläuterungen im mathematischen Sinne exakte Ausrichtung bzw. Positionierung erforderlich ist, wobei diese jeweils als optimal anzusehen ist, sondern dass dies auch Toleranzen einbezieht, von denen der Fachmann weiß, dass sie im hier in Rede stehenden Gebiet der Technik unvermeidbar und damit üblich sind.

Dadurch, dass die Werkzeuge jeweils in im Wesentlichen drei zueinander orthogonal verlaufenden Achsen verfahrbar sind, kann eine im Wesentlichen drallfreie Oberfläche des bearbeiteten Werkstücks zur Verfügung gestellt werden. Vorzugsweise sind die Werkzeuge jeweils in eine erste Richtung zur Einstellung der Schnitttiefe der jeweiligen Werkzeugschneide, in eine zweite Richtung zur tangentialen Bewegung der jeweiligen Werkzeugschneide und in eine dritte Richtung zur Einstellung des Vorschubs der jeweiligen Werkzeugschneide verfahrbar. Weiter ist es bevorzugt, dass die Achsen, in welche die an den Werkzeugen angeordneten Werkzeugschneiden verfahrbar sind, im Wesentlichen zu den Achsen eines dreidimensionalen kartesischen Koordinatensystems korrespondieren.

Dadurch, dass die Werkzeuge jeweils in insgesamt drei zueinander im Wesentlichen orthogonalen Richtungen verfahrbar sind, vorzugsweise translatorisch verfahrbar sind, kann eine im Wesentlichen tangential und/oder orthogonal zur Rotationsachse gerichtete Bewegung der jeweiligen Werkzeugschneide des Werkzeugs verursacht werden, wodurch eine im Wesentlichen drallfreie Oberfläche des bearbeiteten Werkstücks zur Verfügung gestellt werden kann. Ein solches Verfahren der Werkzeugschneiden ist ebenfalls hinsichtlich der Standzeiten der Werkzeugschneiden vorteilhaft. Bezüglich des translatorischen Verfahrens der Werkzeuge ist es ferner bevorzugt, dass das Verfahren der Werkzeugschubvorrichtungen im Wesentlichen überlagert wird. Dies bedeutet beispielsweise, dass das Werkzeug mittels der Werkzeugschubvorrichtung sowohl zeitgleich parallel als auch tangential zur Rotationsachse des Werkstücks verfahren werden kann. Dadurch wird auch eine nicht in eine der Achsen gerichtete Bewegung der Werkzeugschneiden ermöglicht.

Eine vorteilhafte Ausgestaltung der Erfindung ist dadurch gekennzeichnet, dass die Werkzeugschubvorrichtungen jeweils zumindest drei Linearantriebe zur translatorischen Bewegung der Werkzeuge und der an den Werkzeugen angeordneten Werkzeugschneiden in im Wesentlichen drei zueinander orthogonal verlaufenden Achsen aufweisen. Hierdurch können die Werkzeuge in voneinander in linear unabhängige Richtungen verlaufende translatorische Bewegungsachsen bewegt werden. Vorzugsweise verläuft die translatorische Bewegungsachse der ersten Linearantriebe im Wesentlichen derart orthogonal zu der Rotationsachse des zu bearbeitenden Werkstücks, dass über die ersten Linearantriebe die Schnitttiefe der Werkzeugschneiden in das zu bearbeitende Werkstück eingestellt werden kann. Vorzugsweise verläuft die translatorische Bewegungsachse der zweiten Linearantriebe im Wesentlichen derart orthogonal zu der Rotationsachse des zu bearbeitenden Werkstücks, so dass mittels der zweiten Linearantriebe eine tangentiale Bewegung des Werkzeugs und der Werkzeugschneide relativ zu dem zu bearbeitenden Werkstück verursacht werden kann. Vorzugsweise verläuft die translatorische Bewegungsachse der dritten Linearantriebe im Wesentlichen derart parallel zu der Rotationsachse des zu bearbeitenden Werkstücks, dass mittels der dritten Linearantriebe der Vorschub der Werkzeuge und der Werkzeugschneiden eingestellt werden kann.

Es ist bevorzugt, dass die Werkzeugschubvorrichtungen durch eine Steuerung gesteuert werden. Insbesondere ist es bevorzugt, dass es sich bei der Steuerung um eine CNC-Steuerung handelt, mittels welcher zumindest zwei CNC-Programme unabhängig voneinander ausgeführt werden können. Hierdurch können die zumindest zwei Werkzeugschubvorrichtungen unabhängig voneinander gesteuert werden.

Eine weitere vorteilhafte Ausgestaltung der Erfindung ist dadurch gekennzeichnet, dass eine Steuerung die Werkzeugschubvorrichtungen derart steuert, dass die Werkzeugschneiden der Werkzeuge im Wesentlichen gegenüberliegende Flächen des Werkstücks bearbeiten. Dies ist insbesondere hinsichtlich eines Ausgleichs entstehender Schnittkräfte vorteilhaft, wodurch die Maßhaltigkeit des bearbeiteten Werkstücks erhöht werden kann. Ebenfalls kann eine Verbiegung des Werkstücks während der spanenden Bearbeitung verringert oder vermieden werden.

Nach einer weiteren bevorzugten Ausgestaltung weist die Werkzeugmaschine einen Schwenkrevolver mit zumindest zwei Greifvorrichtungen zur Beladung des Arbeitsraums mit einem zu bearbeitenden Werkstück auf. Hierbei ist es insbesondere bevorzugt, dass die zumindest zwei Greifvorrichtungen mittels des Schwenkrevolvers um im Wesentlichen 180° schwenkbar sind. In einer ersten Position können die Greifvorrichtungen ein zu bearbeitendes Werkstück beispielsweise von einem Band greifen. Anschließend können die Greifvorrichtungen mittels einer Verschwenkung um im Wesentlichen 180° das zu bearbeitende Werkstück in den Arbeitsraum der Werkzeugmaschine verschwenken und das Werkstück derart in dem Arbeitsraum positionieren, dass das Werkstück mittels der Werkstückspindel aufgenommen und rotatorisch angetrieben werden kann. Nach der Bearbeitung des Werkstücks kann die Greifvorrichtung das fertig bearbeitete Werkstück erneut, vorzugsweise um im Wesentlichen 180°, verschwenken, so dass das fertig bearbeitete Werkstück beispielsweise auf einem Band abgesetzt werden kann.

Des Weiteren ist es bevorzugt, dass die zumindest zwei Greifeinrichtungen gegenläufig zueinander angeordnet sind. Hierdurch kann zeitgleich eine Bearbeitung eines Werkstücks und das Beladen und/oder Entladen eines weiteren Werkstücks ermöglicht werden, wodurch die Taktzeiten und Beladezeiten einer erfindungsgemäßen Werkzeugmaschine weiter reduziert werden können.

Eine weitere bevorzugte Ausgestaltung ist dadurch gekennzeichnet, dass die Werkzeugschneiden einen Neigungswinkel von 25° bis 45°, insbesondere von 30° bis 40°, aufweisen. Dabei ist der Neigungswinkel vorzugsweise der Winkel zwischen einer Werkzeugbezugsebene und der Werkzeugschneide. Eine bevorzugte Werkzeugbezugsebene verläuft durch die Rotationsachse des zu bearbeitenden Werkstücks und durch den Mittelpunkt der jeweiligen Werkzeugschneide.

Bei einer weiteren bevorzugten Ausgestaltung weist die Werkzeugmaschine eine Messeinrichtung zur Messung der bearbeiteten Werkstücke auf, wobei die Messeinrichtung und/oder eine mit der Messeinrichtung verbundene Steuereinrichtung die Steuerung oder bestimmte Parameter der Steuerung der Werkzeugmaschine in Abhängigkeit der Messergebnisse der Messeinrichtung anpasst. Hierdurch können während der Bearbeitung eine kontinuierliche Verbesserung der Maßhaltigkeit und/oder eine bestimmte Maßhaltigkeit der bearbeiteten Werkstücke sichergestellt werden.

Eine weitere bevorzugte Ausgestaltung ist dadurch gekennzeichnet, dass die Werkzeugmaschine ferner zumindest zwei Werkzeugrevolver aufweist, dass die zumindest zwei Werkzeugrevolver mittels der Werkzeugschubvorrichtungen verfahrbar sind, und dass die zumindest zwei Werkzeugrevolver jeweils eine Mehrzahl an Aufnahmen für Werkzeuge aufweisen, wobei die Mehrzahl an Aufnahmen mittels des jeweiligen Werkzeugrevolvers verschwenkt werden kann. Vorzugsweise weist ein Werkzeugrevolver jeweils zwischen 4 und 10 Aufnahmen für unterschiedliche Werkzeuge auf. Durch eine Verschwenkung der an einem Werkzeugrevolver angeordneten Aufnahmen können verschiedenartige Werkzeuge aufweisend unterschiedliche Werkzeugschneiden in eine Eingriffsposition zur spanenden Bearbeitung des Werkstücks gebracht werden. Hierdurch erhöht sich die Flexibilität der Werkzeugmaschine, da das Werkstück mit unterschiedlichen Werkzeugen bearbeitet werden kann. Vorzugsweise sind die zumindest zwei Werkzeugrevolver jeweils einer Werkzeugschubvorrichtung zugeordnet und mittels der jeweiligen Werkzeugschubvorrichtungen verfahrbar.

Erfindungsgemäß wird die zuvor genannte Aufgabe gemäß einem zweiten Aspekt der Erfindung durch ein Verfahren zur spanenden Bearbeitung von Flächen eines um eine Rotationsachse rotierenden Werkstücks mit den in Anspruch 9 angegebenen Merkmalen gelöst. Bevorzugte und vorteilhafte Ausgestaltungen des erfindungsgemäßen Verfahrens sind beispielsweise in den auf Anspruch 9 rückbezogenen Unteransprüchen angegeben.

Das erfindungsgemäße Verfahren ist dadurch gekennzeichnet, dass mindestens zwei Werkzeuge zur Spanabhebung jeweils aufweisend zumindest eine Werkzeugschneide mit dem rotierenden Werkstück in spanenden Eingriff gebracht werden, dass die Werkzeugschneiden im spanenden Eingriff mit dem rotierenden Werkstück translatorisch im Wesentlichen parallel zu der Rotationsachse des Werkstücks bewegt werden, und dass die Werkzeugschneiden im spanenden Eingriff mit dem rotierenden Werkstück translatorisch im Wesentlichen tangential zu der Rotationsachse des Werkstücks bewegt werden. Insbesondere ist es bevorzugt, dass die Werkstücke zeitgleich im Wesentlichen parallel und tangential zu der Rotationsachse des Werkstücks während der spanenden Bearbeitung des Werkstücks bewegt werden. Hierdurch kann sowohl eine im Wesentlichen drallfreie Oberfläche des bearbeiteten Werkstücks sichergestellt werden als auch während der spanenden Bearbeitung entstehende Schnittkräfte reduziert werden. Weitere Vorteile eines derart durchgeführten Verfahrens sind insbesondere in Zusammenhang mit der erfindungsgemäßen Werkzeugmaschine erläutert.

Nach einer bevorzugten Ausgestaltung bearbeiten die Werkzeugschneiden im spanenden Eingriff im Wesentlichen gegenüberliegende Flächen des rotierenden Werkstücks. Dies ist insbesondere hinsichtlich eines Ausgleichs entstehender Schnittkräfte vorteilhaft, wodurch die Maßhaltigkeit des bearbeiteten Werkstücks erhöht werden kann. Ebenfalls kann eine Verbiegung des Werkstücks während der spanenden Bearbeitung verringert oder vermieden werden.

Eine weitere bevorzugte Ausgestaltung ist dadurch gekennzeichnet, dass die Werkzeugschneiden während der Bearbeitung des Werkstücks gleichzeitig translatorisch im Wesentlichen parallel sowie im Wesentlichen tangential zu der Rotationsachse des Werkstücks bewegt werden oder dass die Werkzeugschneiden während der Bearbeitung des Werkstücks zunächst im Wesentlichen parallel und anschließend im Wesentlichen tangential zu der Rotationsachse des Werkstücks bewegt werden. Hierdurch kann das Verfahren an unterschiedliche Anwendungsszenarien angepasst werden, wodurch die Flexibilität des Verfahrens erhöht werden kann. Hinsichtlich der zunächst parallelen und anschließend tangentialen Bewegung der Werkzeugschneide ist es bevorzugt, dass die beschriebene Bewegung der Werkzeugschneide solange wiederholt wird, bis der gewünschte Bereich des Werkstücks bearbeitet worden ist.

Bei einer weiteren bevorzugten Ausgestaltung werden die Werkzeugschneiden zu Beginn der spanenden Bearbeitung zunächst in Eingriff mit einer tangential zu der Mitte des Werkstücks versetzten Fläche des zu bearbeitenden Werkstücks gebracht. Demnach greift die Werkzeugschneide zu Beginn der spanenden Bearbeitung nicht in der Mitte, insbesondere nicht in der Wellenmitte, des zu bearbeitenden Werkstücks ein. Der Anschnitt des Werkstücks wird demnach nicht in der Mitte des Werkstücks durchgeführt. Hierdurch können die Werkzeugschneiden mittels einer in eine Richtung gerichteten tangentialen Bewegung eine spanende Bearbeitung des Werkstücks mit einer hohen Maßhaltigkeit sicherstellen. Dabei ist es bevorzugt, dass die gewünschte Schnitttiefe bei der spanenden Bearbeitung des Werkstücks erst in der Mitte des Werkstücks erreicht wird.

Eine weitere bevorzugte Ausgestaltung ist dadurch gekennzeichnet, dass die bearbeiteten Werkstücke gemessen werden und dass das Verfahren in Abhängigkeit der Messergebnisse angepasst wird. Hierdurch können eine kontinuierliche Verbesserung sowie eine bestimmte Maßhaltigkeit der bearbeiteten Werkstücke sichergestellt werden.

Nachfolgend wird die Erfindung anhand einer ein Ausführungsbeispiel zeigenden Zeichnung näher erläutert. Es zeigen jeweils schematisch:
- Fig. 1: eine perspektivische Darstellung eines Ausführungsbeispiels einer Werkzeugmaschine;
- Fig. 2: eine Schnittansicht der Werkzeugschubvorrichtung der in Fig. 1 dargestellten Werkzeugmaschine;
- Fig. 3: eine perspektivische Ansicht eines Werkzeugs aufweisend eine Werkzeugschneide im Eingriff mit einem zu bearbeitenden Werkstück; und
- Fig. 4: eine Draufsicht der in Fig. 3 dargestellten Ansicht eines Werkzeugs im Eingriff mit einem zu bearbeitenden Werkstück.

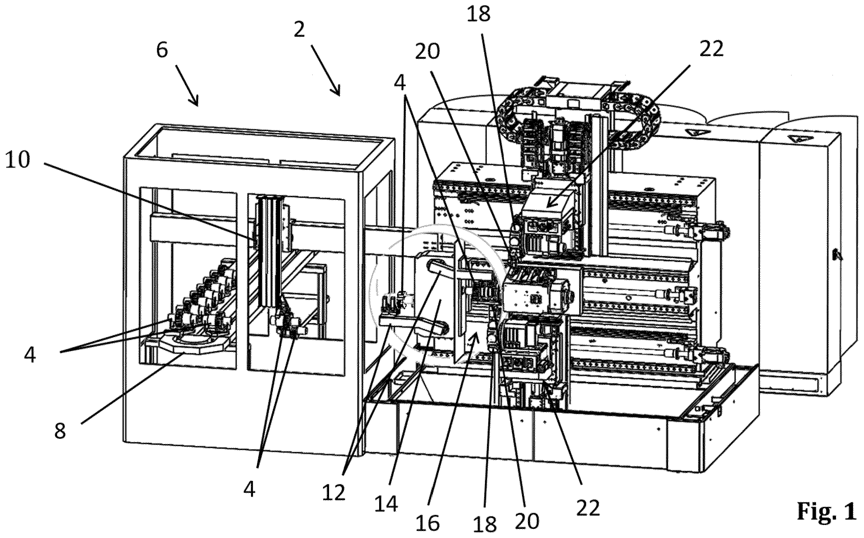

In Fig. 1 ist eine perspektivische Darstellung eines Ausführungsbeispiels einer Werkzeugmaschine 2 dargestellt. Die gezeigte Werkzeugmaschine 2 ist insbesondere zur spanenden Bearbeitung von Flächen, insbesondere von rotationssymmetrischen Flächen eines um eine Rotationsachse R rotierenden Werkstücks 4 geeignet.

Die Werkzeugmaschine 2 weist eine Beladungseinheit 6 zur Beladung der Werkzeugmaschine 2 mit zu bearbeitenden Werkstücken 4 auf. Zur Beladung der Werkzeugmaschine 2 sind eine Vielzahl von zu bearbeitenden Werkstücken 4 beispielsweise auf einem Band 8 angeordnet, wobei die zu bearbeitenden Werkstücke 4 mittels einer Zuführvorrichtung 10 an eine Greifvorrichtung 12 übergeben werden können.

Insgesamt weist die Werkzeugmaschine 2 zwei Greifvorrichtungen 12 auf, die schwenkbar an einem Schwenkrevolver 14 angeordnet sind. Mittels einer Verschwenkung von im Wesentlichen 180° können die Greifvorrichtungen 12 ein zu bearbeitendes Werkstück 4 von der Beladungseinheit 6 in den Arbeitsraum 16 der Werkzeugmaschine 2 und von dem Arbeitsraum 16 zu der Beladungseinheit 6 transportieren.

Vorzugsweise wird während ein Werkstück 4 in dem Arbeitsraum 16 bearbeitet wird, die andere Greifvorrichtung 12 bereits mit einem noch zu bearbeitenden Werkstück 4 beladen. Sobald das Werkstück 4 im Arbeitsraum 16 fertig bearbeitet ist, wird das fertig bearbeitete Werkstück 4 mittels der Greifvorrichtung 12 an die Beladungseinheit 6 übergegeben. Im gleichen Zuge wird ein neues zu bearbeitendes Werkstück 4 mittels der anderen Greifvorrichtung 12 in den Arbeitsraum 16 transportiert.

Sobald das Werkstück 4 mittels der Greifvorrichtung 12 in den Arbeitsraum 16 verschwenkt wird, wird das Werkstück 4 durch Zuführung von zwei Werkstückspindeln (vorliegend aufgrund der Perspektive und der Einspannung nicht sichtbar) eingespannt. Es ist bevorzugt, dass zumindest eine Werkzeugspindel in Richtung der Rotationsachse des zu bearbeitenden Werkstücks 4 (also in Richtung der Z-Achse) verfahrbar ist. Die zweite mitlaufende Werkstückspindel ist vorzugsweise in dem Schwenkrevolver 14 gelagert. Zur Bearbeitung des Werkstücks 4 wird das Werkstück 4 durch die Rotation zumindest einer der Werkstückspindeln in eine rotierende Bewegung um eine Rotationsachse R versetzt.

Weiter werden an Werkzeugrevolvern 18 angeordnete Werkzeuge 20 mit dem rotierenden Werkstück 4 zur spanenden Bearbeitung in Eingriff gebracht. Zur Bewegung der an den Werkzeugrevolvern 18 angeordneten Werkzeuge 20 sind die Werkzeugrevolver 18 an Werkzeugschubvorrichtungen 22 angeordnet. Dabei ist jeweils ein Werkzeugrevolver 18 einer Werkzeugschubvorrichtung 22 zugeordnet.

Mittels der Werkzeugschubvorrichtungen 22 können die Werkzeugrevolver 18 und die an den Werkzeugrevolvern 18 angeordneten Werkzeuge 20 translatorische in drei zueinander im Wesentlichen orthogonal verlaufenden Achsen (X, Y, Z) verfahren werden.

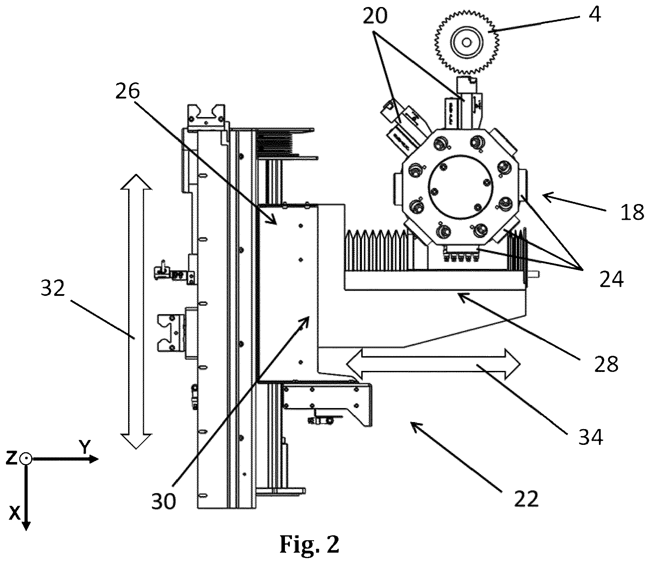

Fig. 2 zeigt eine Schnittansicht einer Werkzeugschubvorrichtung 22 der in Fig. 1 dargestellten Werkzeugmaschine 2. Vorzugsweise weisen die beiden Werkzeugschubvorrichtungen 22 einen ähnlichen Aufbau auf. Es ist erkennbar, dass der Werkzeugrevolver 18 insgesamt acht verschiedene Aufnahmen 24 zur Aufnahme von Werkzeugen 20 aufweist, wobei zwei Werkzeuge 20 in den Aufnahmen 24 des Werkzeugrevolvers 18 angeordnet sind. Mittels der verschiedenen Aufnahmen 24 können unterschiedliche Werkzeuge 20 zur Bearbeitung von Werkstücken 4 zur Verfügung gestellt werden, wodurch die Flexibilität der Werkzeugmaschine 2 erhöht wird.

Der Werkzeugrevolver 18 ist mittels der Werkzeugschubvorrichtung 22 in im Wesentlichen drei zueinander orthogonal verlaufenden Achsen (X, Y, Z) verfahrbar. Hierzu weist die Werkzeugschubvorrichtung 22 drei Linearantriebe 26, 28 und 30 zur translatorischen Bewegung des Werkzeugrevolvers 18 und damit auch der an dem Werkzeugrevolver 18 angeordneten Werkzeugen 20 auf. Der dritte Linearantrieb 30 ist aufgrund der gewählten Perspektive nicht erkennbar.

Mittels des ersten Linearantriebs 26 ist der Werkzeugrevolver 18 in Richtung des ersten Doppelpfeils 32 und damit in X-Richtung verfahrbar. Ein Verfahren des ersten Linearantriebs 26 ermöglicht eine Einstellung der Schnitttiefe. Mittels des zweiten Linearantriebs 28 ist der Werkzeugrevolver 18 in Richtung des zweiten Doppelpfeils 34 und damit in Y-Richtung verfahrbar. Ein Verfahren des zweiten Linearantriebs 28 ermöglicht eine tangentiale Bewegung des Werkzeugs 20 zu der Rotationsachse R des Werkstücks 4. Mittels des dritten Linearantriebs 30 ist der Werkzeugrevolver 18 in Z-Richtung verfahrbar. Ein Verfahren des dritten Linearantriebs 30 ermöglicht eine Einstellung des Vorschubs des Werkzeugs 20.

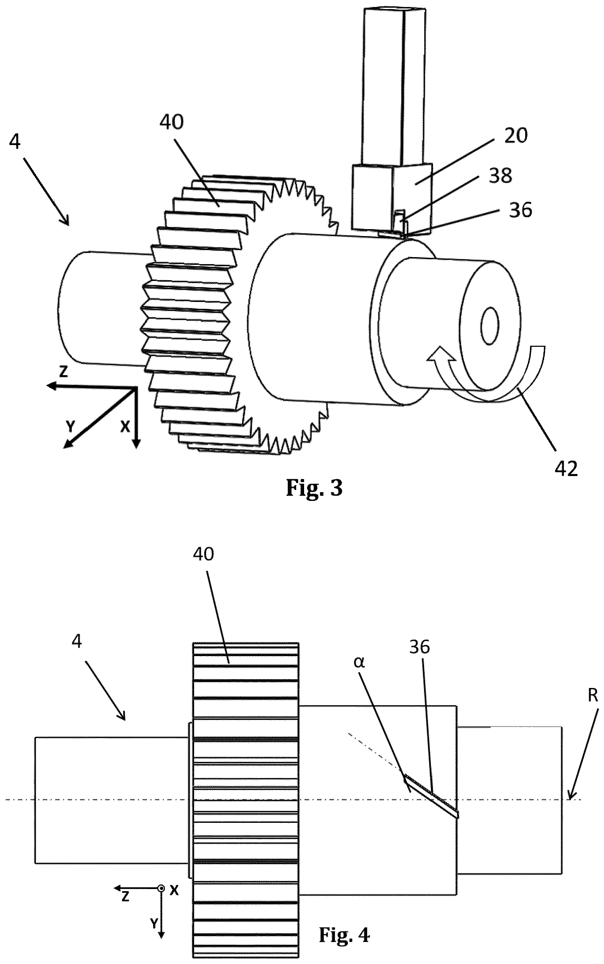

In Fig. 3 ist eine perspektivische Ansicht eines Werkzeugs 20 aufweisend eine Werkzeugschneide 36 im Eingriff mit einem zu bearbeitenden Werkstück 4 dargestellt. Die Werkzeugschneide 36 ist mittels eines Spannelements 38 an dem Werkzeug 20 befestigt.

Das zu bearbeitende Werkstück 4 ist vorliegend als Welle aufweisend unterschiedliche Außendurchmesser ausgestaltet. Ebenfalls weist das Werkstück 4 eine Verzahnung 40 auf. Mittels der Werkstückspindel wird das Werkstück 4 in Drehrichtung 42 rotierend angetrieben. Während der spanenden Bearbeitung des Werkstücks 4 mittels der Werkzeugschneide 36 kann die Werkzeugschneide 36 in Richtung der verschiedenen Achsen X, Y und Z mittels der Linearantriebe 26, 28 und 30 der Werkzeugschubvorrichtung 22 verfahren werden. Ein Verfahren der Werkzeugschneide 36 in Z-Richtung führt zu einer Veränderung des Vorschubs der Werkzeugschneide 36. Durch ein Verfahren des Linearantriebs 28 wird die Werkzeugschneide 36 im Wesentlichen tangential zu der Rotationsachse R des Werkstücks 4 (also in Richtung der Y-Achse) bewegt, wodurch eine im Wesentlichen drallfreie Oberfläche des zu bearbeitenden Werkstücks 4 zur Verfügung gestellt werden kann.

Fig. 4 zeigt eine schematische Draufsicht der in Fig. 3 dargestellten Ansicht. Ebenfalls dargestellt ist der Neigungswinkel α, welcher vorzugsweise den Winkel zwischen der durch die Rotationsachse R sowie den Mittelpunkt der Werkzeugschneide 36 aufgespannten Ebene und der Werkzeugschneide 36 angibt.

### Bezugszeichen

- 2: Werkzeugmaschine
- 4: Werkstück
- 6: Beladungseinheit
- 8: Band
- 10: Zuführvorrichtung
- 12: Greifvorrichtung
- 14: Schwenkrevolver
- 16: Arbeitsraum
- 18: Werkzeugrevolver
- 20: Werkzeug
- 22: Werkzeugschubvorrichtung
- 24: Aufnahme der Werkzeugschubvorrichtung
- 26: Erster Linearantrieb
- 28: Zweiter Linearantrieb
- 30: Dritter Linearantrieb
- 32: Erster Doppelpfeil
- 34: Zweiter Doppelpfeil
- 36: Werkzeugschneide
- 38: Spannelement
- 40: Verzahnung
- 42: Drehrichtung des Werkstücks
- R: Rotationsachse des Werkstücks
- α: Neigungswinkel der Werkzeugschneide

## Patentansprüche

1. Werkzeugmaschine zur spanenden Bearbeitung von Flächen, insbesondere von rotationssymmetrischen Flächen, eines um eine Rotationsachse (R) rotierenden Werkstücks (4) umfassend:
- mindestens einen Arbeitsraum (16),
- mindestens eine in dem Arbeitsraum (16) angeordnete Werkstückspindel zur Aufnahme und zum rotierenden Antrieb des Werkstücks (4),
- mindestens zwei Werkzeuge (20), wobei die Werkzeuge (20) jeweils zumindest eine Werkzeugschneide (36) aufweisen und wobei die Werkzeugschneiden (36) mit dem rotierenden Werkstück (4) in spanenden Eingriff bringbar sind, und
- zumindest zwei Werkzeugvorschubvorrichtungen (22) zur translatorischen Bewegung der Werkzeuge (20) sowie der an den Werkzeugen (20) angeordneten Werkzeugschneiden (36), wobei jeweils ein Werkzeug (20) einer Werkzeugschubvorrichtung (22) zugeordnet ist,
**dadurch gekennzeichnet,**
**dass** die Werkzeuge (20) sowie die an den Werkzeugen (20) angeordneten Werkzeugschneiden (36) mittels der Werkzeugschubvorrichtungen (22) in im Wesentlichen drei zueinander orthogonal verlaufenden Achsen (X, Y, Z) verfahrbar sind.

2. Werkzeugmaschine nach Anspruch 1,
**dadurch gekennzeichnet,**
**dass** die Werkzeugschubvorrichtungen (22) jeweils zumindest drei Linearantriebe (26, 28, 30) zur translatorischen Bewegung der Werkzeuge (20) und der an den Werkzeugen (20) angeordneten Werkzeugschneiden (36) in im Wesentlichen drei zueinander orthogonal verlaufenden Achsen (X, Y, Z) aufweisen.

3. Werkzeugmaschine nach Anspruch 1 oder 2,
**dadurch gekennzeichnet,**
**dass** eine Steuerung die Werkzeugschubvorrichtungen (22) derart steuert, dass die Werkzeugschneiden (36) der Werkzeuge (20) im Wesentlichen gegenüberliegende Flächen des Werkstücks (4) bearbeiten.

4. Werkzeugmaschine nach einem der vorhergehenden Ansprüche,
**dadurch gekennzeichnet,**
**dass** die Werkzeugmaschine einen Schwenkrevolver (14) mit zumindest zwei Greifvorrichtungen (12) zur Beladung des Arbeitsraums (16) mit einem zu bearbeitenden Werkstück (4) aufweist.

5. Werkzeugmaschine nach Anspruch 4,
**dadurch gekennzeichnet,**
**dass** die zumindest zwei Greifeinrichtungen (12) gegenläufig zueinander angeordnet sind.

6. Werkzeugmaschine nach einem der vorhergehenden Ansprüche,
**dadurch gekennzeichnet,**
**dass** die Werkzeugschneiden (36) einen Neigungswinkel (a) von 25° bis 45°, insbesondere von 30° bis 40°, aufweisen.

7. Werkzeugmaschine nach einem der vorhergehenden Ansprüche,
**dadurch gekennzeichnet,**
**dass** die Werkzeugmaschine (2) eine Messeinrichtung zur Messung der bearbeiteten Werkstücke (4) aufweist und
- **dass** die Messeinrichtung und/oder eine mit der Messeinrichtung verbundene Steuereinrichtung die Steuerung der Werkzeugmaschine (2) in Abhängigkeit der Messergebnisse der Messeinrichtung anpasst.

8. Werkzeugmaschine nach einem der vorhergehenden Ansprüche,
**dadurch gekennzeichnet,**
- **dass** die Werkzeugmaschine (2) zumindest zwei Werkzeugrevolver (18) aufweist,
- **dass** die zumindest zwei Werkzeugrevolver (18) mittels der Werkzeugschubvorrichtungen (22) verfahrbar sind, und
- **dass** die zumindest zwei Werkzeugrevolver (18) jeweils eine Mehrzahl an Aufnahmen (24) für Werkzeuge (20) aufweisen, wobei die Mehrzahl an Aufnahmen (24) mittels des Werkzeugrevolvers (18) verschwenkt werden kann.

9. Verfahren zur spanenden Bearbeitung von Flächen, insbesondere von rotationssymmetrischen Flächen, eines um eine Rotationsachse (R) rotierenden Werkstücks (4),
- bei dem mindestens zwei Werkzeuge (20) zur Spanabhebung jeweils aufweisend zumindest eine Werkzeugschneide (36) mit dem rotierenden Werkstück (4) in spanenden Eingriff gebracht werden, und
- bei dem die Werkzeugschneiden (36) im spanenden Eingriff mit dem rotierenden Werkstück (4) translatorisch im Wesentlichen parallel und im Wesentlichen tangential zu der Rotationsachse (R) des Werkstücks (4) bewegt werden.

10. Verfahren nach Anspruch 9,
**dadurch gekennzeichnet,**
- **dass** die Werkzeugschneiden (36) im spanenden Eingriff im Wesentlichen gegenüberliegende Flächen des rotierenden Werkstücks (4) bearbeiten.

11. Verfahren nach Anspruch 9 oder 10,
**dadurch gekennzeichnet,**
- **dass** die Werkzeugschneiden (36) während der Bearbeitung des Werkstücks (4) gleichzeitig im Wesentlichen parallel sowie im Wesentlichen tangential zu der Rotationsachse (R) des Werkstücks (4) bewegt werden oder
- **dass** die Werkzeugschneiden (36) während der Bearbeitung des Werkstücks (4) zunächst im Wesentlichen parallel und anschließend im Wesentlichen tangential zu der Rotationsachse (R) des Werkstücks (4) bewegt werden.

12. Verfahren nach einem der Ansprüche 9 bis 11,
**dadurch gekennzeichnet,**
- **dass** die Werkzeugschneiden (36) zu Beginn der spanenden Bearbeitung des Werkstücks (4) in Eingriff mit einer tangential zu der Mitte des Werkstücks (4) versetzten Fläche des zu bearbeitenden Werkstücks (4) gebracht werden.

13. Verfahren nach einem der Ansprüche 9 bis 12,
**dadurch gekennzeichnet,**
- **dass** die bearbeiteten Werkstücke (4) gemessen werden, und
- **dass** das Verfahren in Abhängigkeit der Messergebnisse angepasst wird.
